# EUROPEAN PATENT APPLICATION

(11) **EP 2 447 115 A1**
(43) Date of publication of application: **02.05.2012**
(21) Application number: 10791934.2
(22) Date of filing: 26.05.2010
(51) Int. Cl.: B60R 11/02, B60R 16/02

(54) **CABLE HOLDER FOR MOUNTING ON VEHICLE**

(30) Priority: 25.06.2009 JP 2009151046
(71) Applicant: Nifco INC., Yokohama-shi, Kanagawa 244-8522 (JP)
(72) Inventor: FUKUMOTO, Mitsuru, Yokohama-shi Kanagawa 244-8522 (JP); SOMA, Toshiaki, Yokohama-shi Kanagawa 244-8522 (JP)
(74) Representative: Gassner, Wolfgang
(86) International application number: PCT/JP2010/058930
(87) International publication number: WO 2010/150616

(57) **Abstract**

A cable holder for mounting on a vehicle includes a holder body; at least one pair of connector holding parts (for example, elastic pieces) projecting to face each other inside a connector receiving cavity, for holding a connector fitted into the connector receiving cavity; and a connector push-out device (for example, lever) provided inside the connector receiving cavity, for pushing the connector fitted inside the connector receiving cavity out toward an open face of the connector receiving cavity in opposition to the holding force of the connector holding parts by an external operation.

## Description

### TECHNOLOGICAL FIELD

This invention relates to a cable holder for mounting on vehicle, for example, for holding a connector of a USB cable for connecting a portable digital music player or other portable electronic device to a car audio or other in-vehicle electronic device, and the cable holder includes a mechanism for holding the connector and a mechanism for pushing out by external operation.

### BACKGROUND TECHNOLOGY

There is conventionally known a portable telephone connection structure (for example, see paragraph [0034] and FIG. 5 of Patent Document 1) provided with a cavity for inserting a connector of a cable for connecting a portable telephone, or an in-vehicle holder (for example, see paragraph [0017] and FIGS. 1, 2, 4, and 5 of Patent Document 2) having a pair of circular hooks for holding a connector from both sides.
The circular hooks of the latter in-vehicle holder function to detach the telephone from the connector, and the telephone can be detached from the connector by operating a connector attachment operating part (for example, see paragraph [0003] and FIG. 4 of Patent Document 2).

### Prior Art Documents

### Patent Documents

Patent Document 1: Patent Publication No. 4048820
Patent Document 2: Japanese Unexamined Patent Publication H5-294190

### PROBLEMS TO BE SOLVED BY THE INVENTION

However, in the abovementioned former telephone connection structure, there is a problem that the connector may unexpectedly come out from the cavity because the connector is simply inserted into the cavity.
In the abovementioned latter in-vehicle holder, although the connector can be held by the pair of circular hooks, there is a problem that removal of the connector is difficult.
The present invention was therefore made in consideration of the abovementioned problems of the conventional technology, and an object thereof is to make possible the provision of a cable holder for mounting on vehicle, including a mechanism for holding a connector and a mechanism for pushing out by external operation.
The present invention has the following characteristics.

Firstly, the invention is a cable holder for mounting on a vehicle, for holding a connector of a cable with said connector having one side connected to an in-vehicle electronic device (for example, car audio), and another side to a portable electronic device (for example, portable digital music player).
Secondly, the cable holder for mounting on a vehicle has the following configuration.

### (1) Holder body

The holder body is fixed inside a vehicle compartment, and has a recessed connector receiving cavity in which the connector is fitted.

### (2) Connector holding part

At least one pair of connector holding parts (for example, elastic pieces) is formed projecting to face each other inside the connector receiving cavity, and is used for holding the connector fitted into the connector receiving cavity.

### (3) Connector push-out device

The connector push-out device (for example, lever) is used for pushing the connector fitted inside the connector receiving cavity out toward an open face of the connector receiving cavity in opposition to the holding force of the connector holding parts (for example, elastic pieces) by an external operation.
The present invention may also be characterized by the following point.

The connector push-out device (for example, lever) has the following configuration.

### (1) Rotating part

The rotating part is supported rotatably on the holder body.

### (2) Operating part

The operating part faces outward from the connector receiving cavity in a position on one end part holding the rotating part in between, and is pressable by an operator.

### (3) Pressing part

The pressing part faces inside the connector receiving cavity in a position on the other end part holding the rotating part in between, and is used for rotating centered on the rotating part by a pressing force when the operating part is pressed and pushing the connector fitted inside the connector receiving cavity out toward the open face.
The connector can thus be removed utilizing the pressing force by pressing the operating part, and the structure can be made simple and convenient.
The present invention may also be characterized by the following point.

The connector push-out device has the following configuration.

### (1) Rotating body

The rotating body is supported rotatably on an inner wall of the connector receiving cavity, rotates in one direction and pushes the connector fitted inside the connector receiving cavity out toward the open face, and is pushed by the connector to be rotatable in the opposite direction by fitting the connector in the open face.

### (2) Urging device

The urging device (for example, torsion coil spring) urges a rotational force so as to rotate the rotating body toward the one direction, and are capable of accumulating the rotational force when the rotating body rotates in the opposite direction.

### (3) Lock device

The lock device (for example, rotating body) is used for locking in a state in which the urging device has accumulated the rotational force, and is capable of unlocking the locked state by external operation.

The connector can thus be removed using the urging force of the urging device.

The present invention may also be characterized by the following point.

### The connector push-out device has an operating button.

The operating button (for example, rotating body) is capable of unlocking of the locked state of the lock device.
The locked state of the lock device can thus be unlocked by operating the operating button.
The present invention may also be characterized by the following points.

Firstly, the rotating body is configured with a pair of arms capable of holding the connector fitted inside the connector receiving cavity from both sides.
Secondly, the arms extend vertically toward the open face from the bottom of the connector receiving cavity, and are supported rotatably at mid-height by rotating shafts (for example, arm rotating shafts).

Thirdly, catching parts for catching on an upper face of the connector fitted inside the connector receiving cavity and functioning as the connector holding parts are provided projecting opposite each other on an upper end part of each arm positioned toward the side of the open face of the connector receiving cavity.
Fourthly, mounting parts for mounting a lower face of the connector is disposed on a lower end part of each said arm positioned toward a bottom side of said connector receiving cavity sandwiching said rotating shaft (for example, arm rotating shaft) in between with said catching part, and separated by a distance equal to a thickness of said connector and opposing vertically to each said catching part, said mounting parts pushing said connector out toward said open face when said catching parts rotate in a direction of moving apart from each other.
The functions of the connector holding part and the connector push-out device can thus be combined by the pair of arms capable of holding the connector from both sides.
The present invention may also be characterized by the following points.

Firstly, the holder body is made with a synthetic resin having elasticity.
Secondly, the connector holding part is configured with an elastic piece formed by cutting out the inner wall of the connector receiving cavity.
The elastic piece is thus formed by cutting out the inner wall of the connector receiving cavity of the holder body made with a synthetic resin, the elastic piece is used as the connector holding part, and the structure can be made simple and convenient.
The present invention may also be characterized by the following point.

A metal spring for urging the elastic piece in a projecting direction from the connector receiving cavity is installed on the holder body.
Degradation of the holding force of the connector due to elastic fatigue of the resin of the elastic piece can thus be compensated for by the metal spring.

### EFFECT OF THE INVENTION

Because the present invention is configured as above, the mechanism for holding the connector can prevent the connector from unexpectedly coming out, and retrieving the connector can be facilitated by the mechanism for pushing out.

### BRIEF DESCRIPTION OF THE DRAWINGS

FIG. 1 is a perspective view of a cable holder according to a first embodiment of the present invention having a cable installed.
FIG. 2 is an exploded perspective view of the cable holder.
FIG. 3 is a perspective view of the cable holder in the assembled state.
FIG. 4 is a perspective view showing the cable holder from the direction of the bottom face.
FIG. 5 is a perspective view of the cable holder illustrating the state in which the connector is removed.
FIG. 6 is an exploded perspective view of a cable holder according to a second embodiment of the present invention.
FIG. 7 is a perspective view of the cable holder in the assembled state.
FIG. 8 is a perspective view showing the cable holder from the bottom face direction.
FIG. 9 is a perspective view showing the cable holder from a different direction from that in FIG. 8.
FIG. 10 is a perspective view showing the cable holder from a different direction from that in FIG. 7.
FIG. 11 is a perspective view of the cable holder in the state in which the operating button was pressed.
FIG. 12 is a exploded perspective view of a cable holder according to a third embodiment of the present invention.
FIG. 13 is a partial perspective view of the cable holder in the assembled state.
FIG. 14 is a cross-sectional view along the line a-a in FIG. 13.

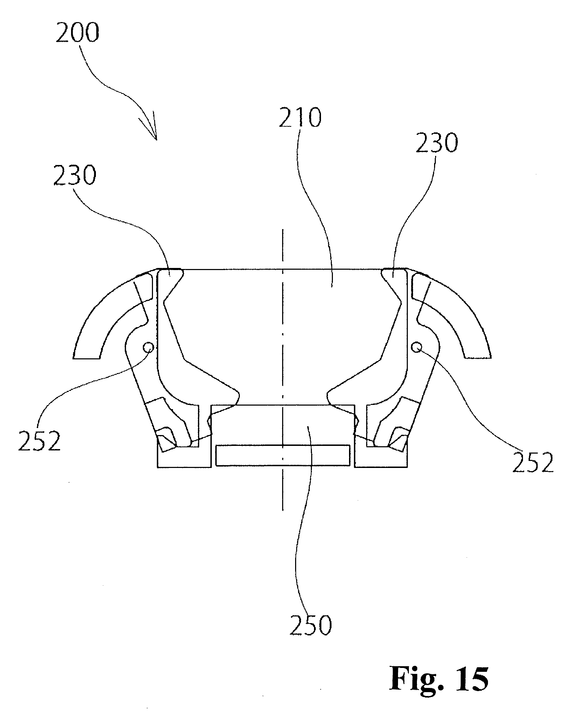

FIG. 15 is a cross-sectional view along the line b-b in FIG. 13.
FIG. 16 is a partial perspective view of the cable connector illustrating the state in which the connector is removed.

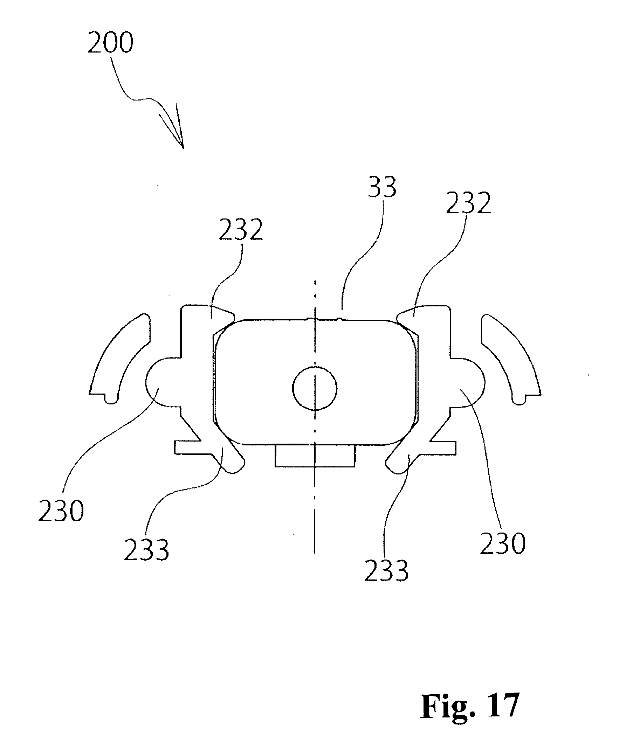

FIG. 17 is a cross-sectional view along the line c-c in FIG. 16.

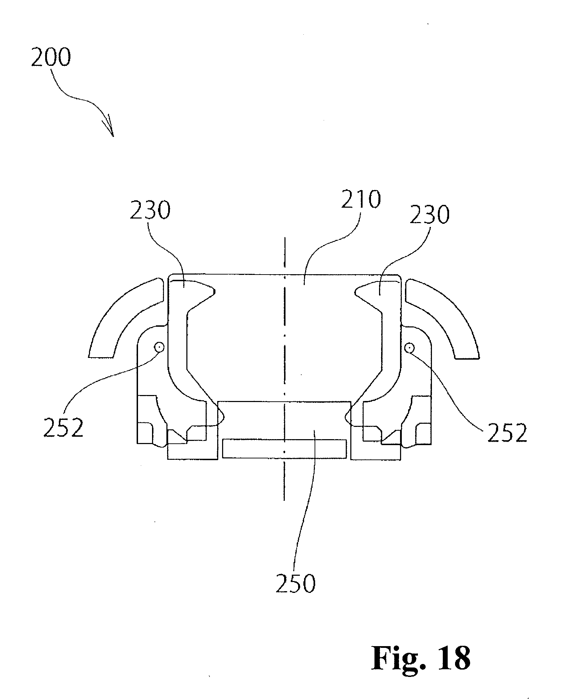

FIG. 18 is a cross-sectional view along the line d-d in FIG. 16.

### EMBODIMENT OF THE INVENTION

### (Cable holder 10 for use in a vehicle)

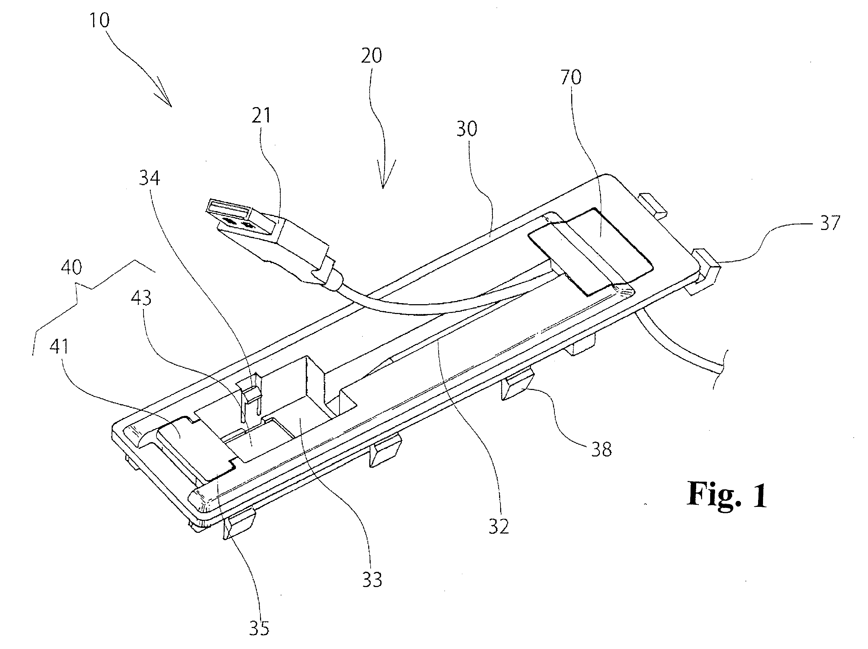

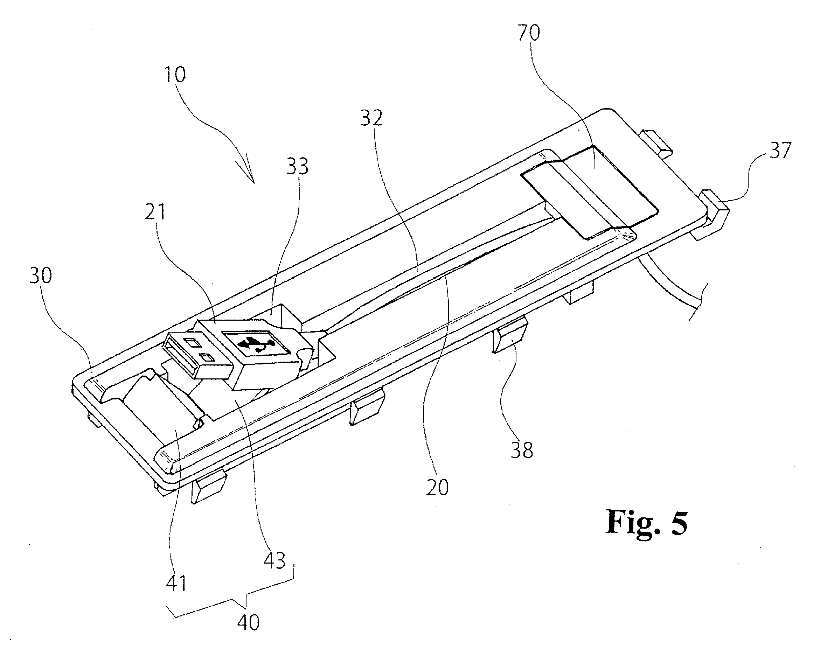

In the drawings, numeral 10 indicates a cable holder for mounting on vehicle, and although not illustrated, this cable holder 10 is fixed in embedded form inside a vehicle compartment.
A cable 20, for example, a USB cable, is held by the cable holder 10, as illustrated in FIGS. 1 and 5. Although a USB cable is illustrated as an example of the cable 20, the invention is not limited to this.

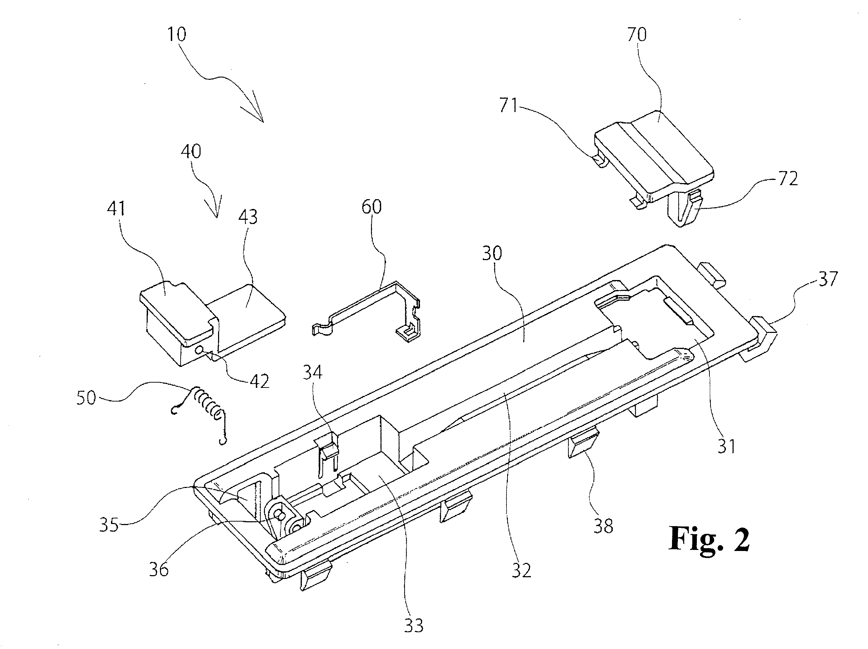

Specifically, one end part of the cable 20 is connected to a car audio or other in-vehicle electronic device (not illustrated), and a connector 21 of a B terminal is provided on the other end part, as illustrated in FIG. 1. A portable digital music player or other portable electronic device (not illustrated) is removably connected to the connector 21.
Meanwhile, the cable holder 10, broadly divided, has the following parts, as illustrated in FIG. 2.

The following (1) to (5) are described later.
(1) Holder body 30
(2) Lever 40
(3) Lever return spring 50
(4) Metal spring 60
(5) Lid 70
The parts of the cable holder 10 are not limited to the above (1) to (5).

### (Holder body 30)

The holder body 30 is formed in a plate form as illustrated in FIG. 2, and is integrally molded, for example, with a synthetic resin having a suitable degree of rigidity and plasticity.

The holder body 30, broadly divided, has the following parts, as illustrated in FIG. 2.
(1) Open part 31
(2) Cable receiving slot 32
(3) Connector receiving cavity 33
(4) Elastic piece 34
(5) Lever attachment part 35
(6) Projecting shaft 36
(7) Insertion piece 37
(8) Elastic claw 38
The parts of the holder body 30 are not limited to the above (1) to (8).

### (Open part 31)

The open part 31 is positioned on one end part of the holder body 30, and is passed through by the cable 20, as illustrated in FIG. 2. Specifically, the open part 31 runs through vertically in a square shape, and is covered by a lid 70, to be described, in the state having passed the cable 20 through.

### (Cable receiving slot 32)

The cable receiving slot 32 extends in a slot form from the open part 31 to the other end part of the holder body 30, and is for the cable 20 coming from the open part 31 to be inserted, as illustrated in FIG. 2. Specifically, the cable receiving slot 32 is hollowed out in a recessed form in section, and the width and depth of the slot nearly match the diameter of the cable 20. One end part of the cable receiving slot 32 facing the open part 31 and the other end part facing a connector receiving cavity 33 to be described are inclined downward to become gradually deeper.

### (Connector receiving cavity 33)

The connector receiving cavity 33 is positioned on the other end part of the holder body 30, connects through to the cable receiving slot 32, and is formed in a recessed form for the connector 21 to fit inside, as illustrated in FIG. 2. Specifically, the connector receiving cavity 33 is formed so as to intersect with the cable receiving slot 32 in a roughly T shape, and the bottom is closed.

### (Elastic piece 34)

The elastic pieces 34 project elastically to face each other inside the connector receiving cavity 33, and are for holding the connector 21 fitted inside the connector receiving cavity 33, as illustrated in FIG. 2.

Specifically, the elastic piece 34 is formed by cutting out the opposite inner walls in the width direction of the connector receiving cavity 33 into an angle-bracket shape. The elastic piece 34 is continuous with the inner wall hinged on a lower end part positioned toward the side of the bottom of the connector receiving cavity 33, and an upper end part serves as a free end. A claw part projecting in a key shape into the connector receiving cavity 33 is provided on the upper end part, and the connector 21 fitted inside the connector receiving cavity 33 is held inside the connector receiving cavity 33 by catching of the claw part on an upper face of the connector 21.

The pair of elastic pieces 34 therefore functions as the connector holding parts. At least one pair of connector holding parts is formed to face each other inside the connector receiving cavity 33, for holding the connector 21 fitted inside the connector receiving cavity 33, but the invention is not limited to one pair of elastic pieces 34.
A pair of elastic pieces 34 is formed, but the invention is not limited to this, and three or more may be formed.

### (Lever attachment part 35 and projecting shaft 36)

The lever attachment part 35 is arranged for insertion of an operating part 41 positioned on one end part of a lever 40 to be described, as illustrated in FIG. 2. Specifically, the lever attachment part 35 is positioned on the end part on the opposite side of the open part 31, and is provided in a recessed form adjacent to the connector receiving cavity 33.

Also, the projecting shaft 36 is positioned in the lever attachment part 35, and is used for supporting a hole-form rotating part 42 of the lever 40 to be described to be capable of rotation, as illustrated in FIG. 2. Specifically, a pair of projecting shafts 36 projects facing inward opposite to each other on the left and right.

### (Insertion piece 37 and elastic claw 38)

The insertion piece 37, although not illustrated, is used for positioning when attaching the holder body 30 inside the vehicle compartment. Specifically, the insertion piece 37 projects in a bent-back V shape from the one end face of the holder 30 where the open part 31 is present.

Also, the elastic claw 38, although not illustrated, is used for attaching the holder body 30 inside the vehicle compartment. Specifically, a plurality of elastic claws 38 projects from the end face in the width direction of the holder body 30.

### (Lever 40)

The lever 40 is used for pushing the connector 21 fitted inside the connector receiving cavity 33 out toward the open face of the connector receiving cavity 33.

The lever 40 is bent in a crank shape, an operating part 41 to be described is provided on one end part, and the operating part 41 is fitted into the lever attachment part 35 of the holder body 30, as illustrated in FIG. 2.
A rotating part 42 is provided beneath the operating part 41, and the rotating part 42 is supported rotatably on the projecting shaft 36 positioned in the lever attachment part 35. Specifically, a pair of rotating parts 42 is formed on the left and right in a hole form for the projecting shafts 36 to be inserted.

A board-form pressing part 43 is formed on the other end part of the lever 40, and the pressing part 43 projects inside the connector receiving cavity 33 from the lever attachment part 35, and is positioned along the bottom of the connector receiving cavity 33.

### (Lever return spring 50)

The lever return spring 50 is used for returning the lever 40 pressed by a finger, and is inserted through the pair of projecting shafts 36 on the left and right of the holder body 30.

Specifically, the lever return spring 50 is configured with a coil spring, one end thereof is hooked on the holder body 30 and another end is hooked on the lever 40, and rotational force is applied to the lever 40 by the return force of unwinding of the wound-tight lever return spring 50. The lever 40 is urged by the rotational force of the lever return spring 50 in a projection direction of the rotating part 41 from the lever attachment part 35.

### (Metal spring 60)

The metal spring 60 is attached on the outer face of the receiving cavity 33 of the holder body 30, and is used for urging the elastic piece 34 in a direction of projection from the connector receiving cavity 33.

### (Lid 70)

The lid 70 is attached to the open part 31 of the holder body 30, and is used for closing the open part 31, as illustrated in FIG. 2. Specifically, the lid 70 includes a pair of catching pieces 71 extending in an L shape in section toward the lower face of the holder body 30, and bent-back pieces 72 projecting in a bent-back V shape from both sides on the left and the right. When the lid 70 is inserted arranging the catching pieces 71 along the lower face of the holder body 30 and is pushed down toward the open part 31, the bent-back pieces 72 are pressed by the inner edges of the open part 31 and draw inward, and return again to catch on the lower face of the holder body 30, and the lid 70 is thus fixed to the open part 31.

### (Method of use)

The method of use of the cable holder 10 having the above configuration is next described.

To remove the connector 21 from the state in which the connector 21 is received inside the connector receiving cavity 33, the operating part 41 of the lever 40 should be pushed down toward the bottom of the lever attachment part 35 of the holder body 30, as illustrated in FIG. 5.
When the lever 40 is pushed down, the lever rotates centered on the projecting shaft 36 of the holder body 30, and the pressing part 43 ascends toward the open face from the bottom of the receiving cavity 33, as illustrated in FIG. 5.

The lower face of the connector 21 is therefore pressed by the pressing part 43 of the lever 40 and begins to ascend.
At this time, the elastic claw 38 projecting inside the connector receiving cavity 33 is pressed by the outer face of the connector 21 and draws inward, and the connector 21 floats up slightly from the open face of the connector receiving cavity 33, as illustrated in FIG. 5.
The connector 21 having floated up can therefore be taken and removed from the connector receiving cavity 33, as illustrated in FIG. 1.

When the force pushing the operating part 41 of the lever 40 down is released, the lever 40 rotates by the rotational force of the lever receiving spring 50, the operating part 41 ascends and returns, and the pressing part 43 descends.
On the other hand, to receive the connector 21 having been removed, the connector 21 should be aligned with and fitted into the open face of the connector receiving cavity 33.
When the connector 21 is fitted in, the connector 21 contacts the elastic claw 38 projecting inside the connector receiving cavity 33.

Here, when the connector 21 is pushed down toward the bottom of the connector receiving cavity 33, the elastic claw 38 is pressed by the outer face of the connector 21 and once draws inward. When the connector 21 passes the elastic claw 38, the elastic claw 38 projects again and catches on the upper face of the connector 21, and the connector 21 is thus held inside the connector receiving cavity 33.

### (Second embodiment)

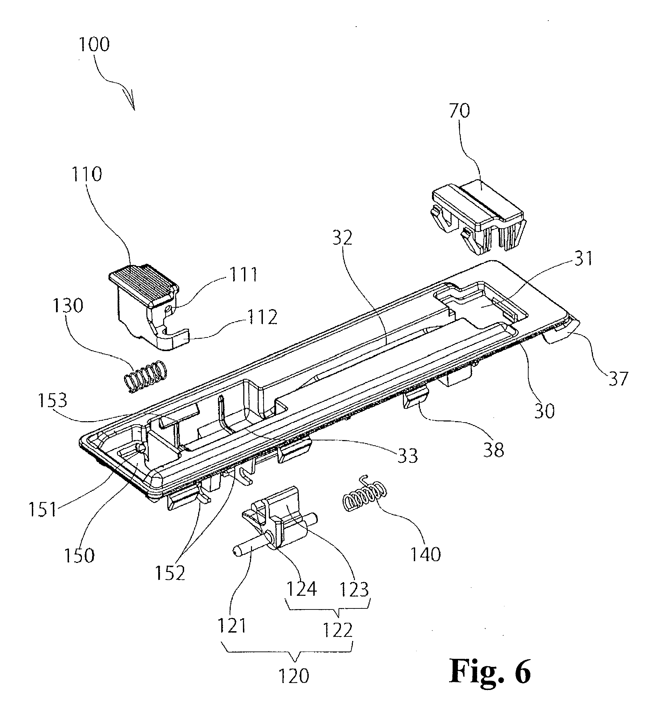

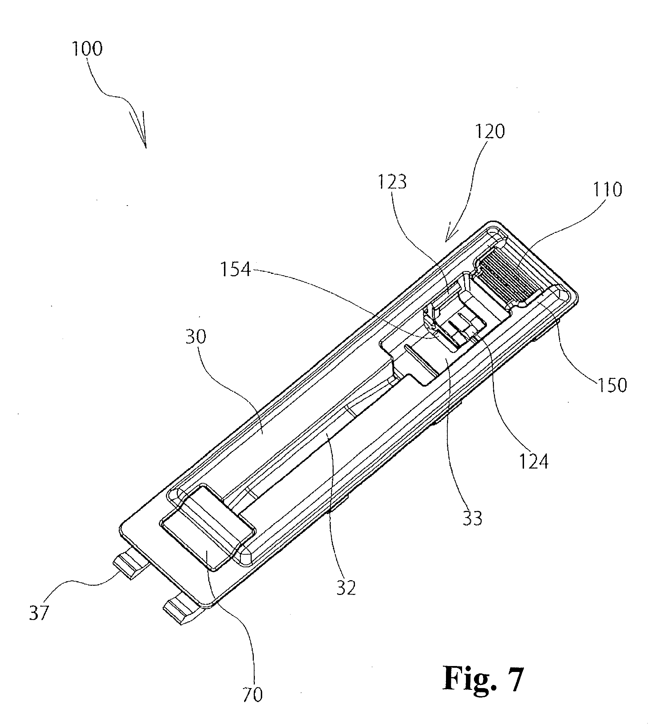

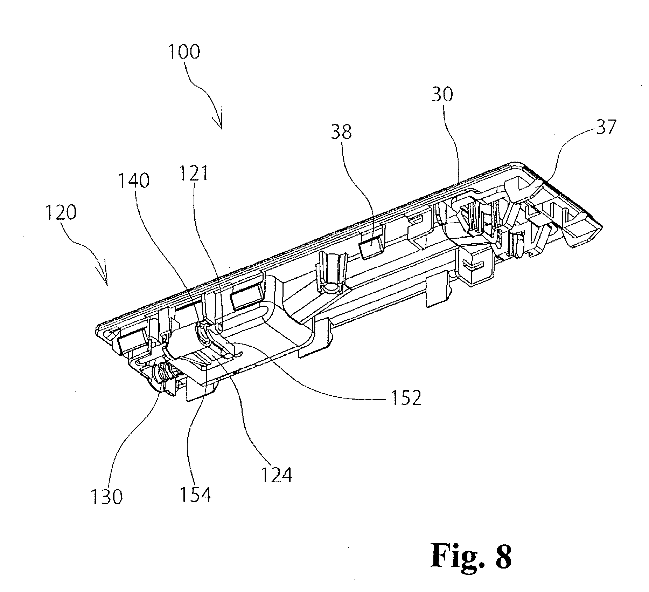

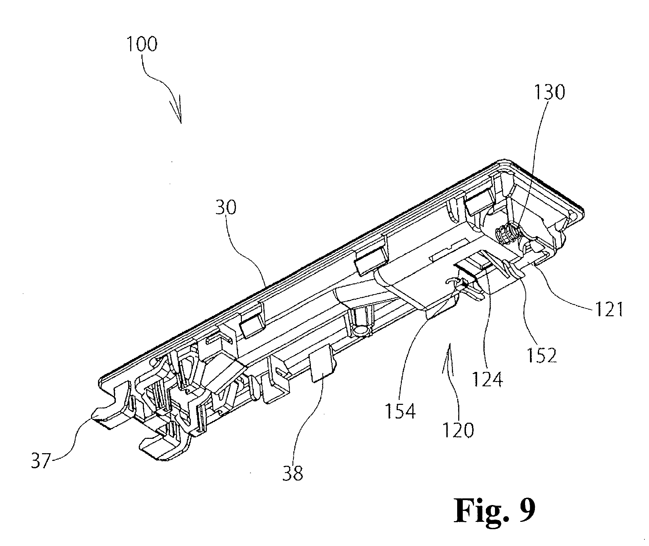

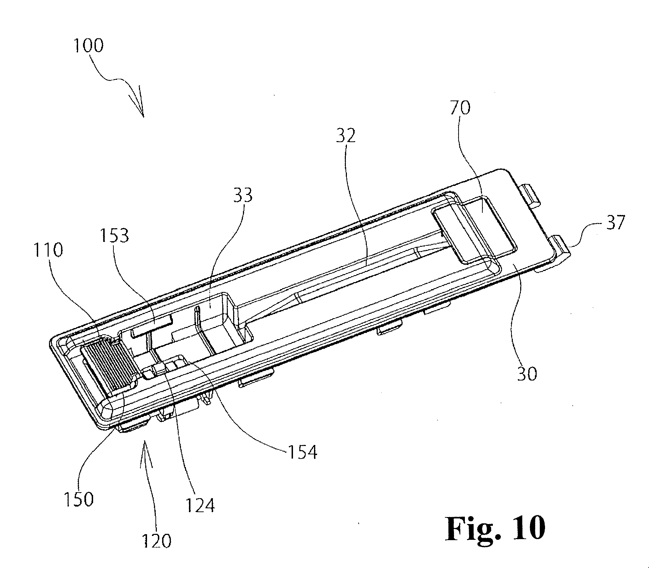

A second embodiment of the present invention is next described using FIGS. 6 to 11.

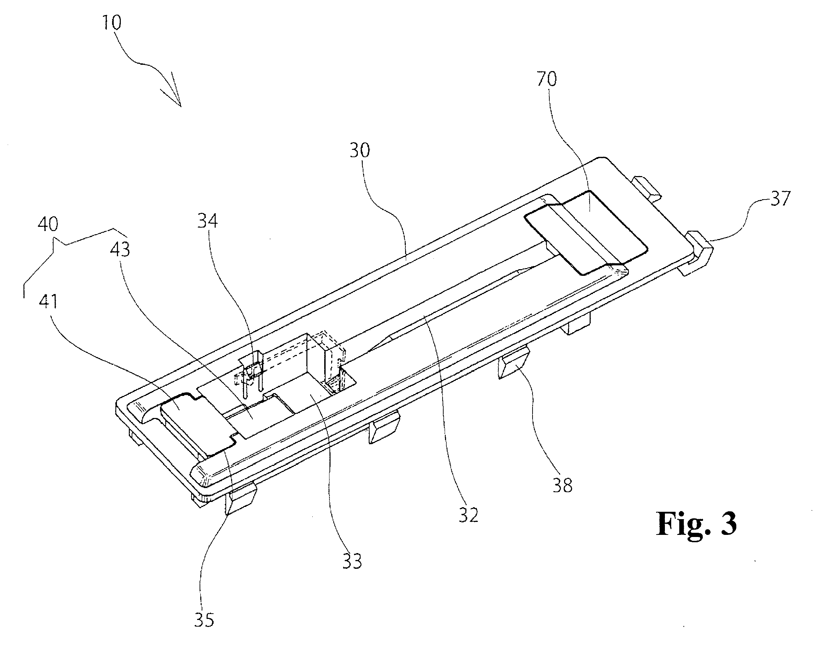

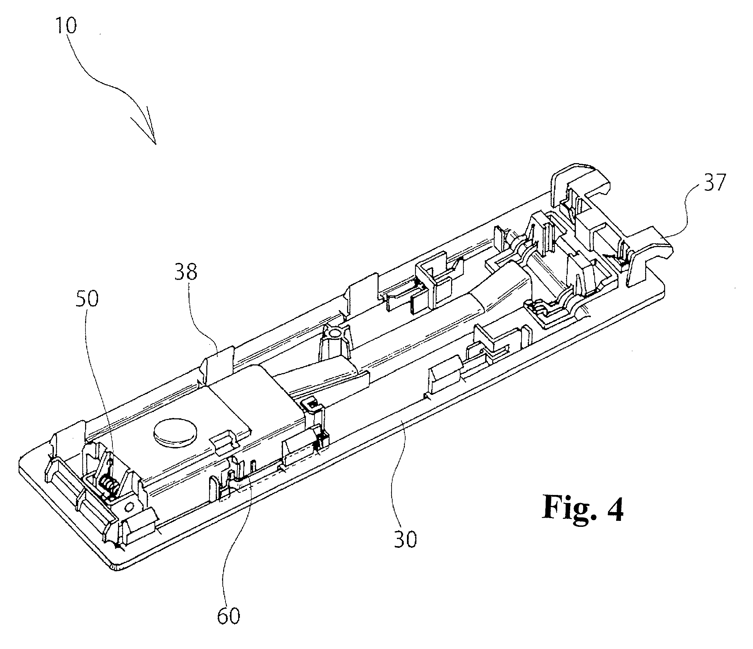

The characteristic point of the present embodiment is that the connector 21 is caused to project using the urging force of a torsion coil spring 140 as an urging device.
The cable holder 100 according to the present embodiment, broadly divided, has the following parts, as illustrated in FIG. 6.
The following (1) to (5), excluding (6), are to be described. Also, in the description of the present embodiment, the same symbols are used for the same constituent parts as in the first embodiment described using FIGS. 1 to 5, and the descriptions are omitted.

(1) Holder body 30
(2) Operating button 110
(3) Rotating body 120 (connector push-out device (lock device))
(4) Compression spring 130
(5) Torsion coil spring 140 (urging device)
(6) Lid 70
The parts of the cable holder 100 are not limited to the above (1) to (6).

### (Holder body 30)

The holder body 30 has nearly the same structure as the holder body 30 of the first embodiment described using FIGS. 1 to 5, as illustrated in FIG. 6.

As for the points of difference, firstly, a button attachment part 150 is provided, as illustrated in FIG. 6, instead of the lever attachment part 35 of the first embodiment. Specifically, the button attachment part 150 is for an operating button 110 to be described to be inserted, and is provided in a recessed form adjacent to the connector receiving cavity 33 in a position on one end part on the side opposite the open part 31.
Secondly, a projecting shaft 151 is provided in the button attachment part 150, as illustrated in FIG. 6. The projecting shaft 151 is inserted into a shaft hole 111 of the operating button 110 to be described, and is used for supporting rotatably the operating button 110. A pair of projecting shafts is provided facing inward opposite each other on the left and right.

Thirdly, a pair of support pieces 152 for supporting rotatably a rotating body 120 to be described is provided on the outside faces in the width direction of the holder body 30. The rotating body 120 is supported rotatably by the pair of support pieces 152 and sliding in the long direction of the holder body 30.
Fourthly, a fixing claw 153 for catching on the upper face of the connector 21 fitted into the connector receiving cavity 33 is provided, projecting opposite a catching piece 123 of the rotating body to be described, on the inside faces of the connector receiving cavity 33. The fixing claw 153 functions as a connector holding part in cooperation with the catching piece 123.

Fifthly, a pass-through hole 154 for a kick-out piece 124 of the rotating body 120 to be described to pass through is provided running through vertically on the bottom of the connector receiving cavity 33. The pass-through hole 154 is formed to a size nearly equal to the size of the kick-out piece 124, and the kick-out piece 124 is blocked from passing through when the rotating body 120 to be described is slid.

### (Operating button 110)

The operating button 110 is of a rotary type, and is used for unlocking a locked state of the rotating body 120 by coupling with the rotating body 120 to be described when the operating button 110 is rotated downward, and sliding the rotating body 120 toward one direction, that is, an unlocking direction (toward the right on the depth side in FIG. 6).

Specifically, a pair of shaft holes 111 for the projecting shafts 151 to be inserted is formed on the left and right on both side faces beneath the operating button 110. Also, an effective part 112 bent in an L shape in section toward the rotating body 120 to be described is provided on the lower end part of the operating button 110.

### (Rotating body 120)

The rotating body 120 is supported rotatably on a support piece 152 of the holder body 30, rotates toward one direction, that is, upward, and pushes the connector 21 fitted inside the connector receiving cavity 33 out toward the open face, and is pushed by the connector 21 toward the opposite direction, that is, rotatable downward, by fitting the connector 21 in the open face.

Also, the rotating body 120 locking when rotated downward and combines the function of the lock device.
The lock device is not limited to the rotating body 120.
That is, the rotating body 120 is configured to lock by sliding on the support piece 152 in one direction, that is, the locking direction (toward the left on the near side in FIG. 6), and to be capable of unlocking the locked state by being pushed by the effective part 112 when the operating button 110 is pushed down and sliding in the reverse direction to the locking direction, that is, the unlocking direction (toward the right on the depth side in FIG. 6).

Specifically, the rotating body 120 has the following parts, as illustrated in FIG. 6.
The parts of the rotating body 120 are not limited to the following (1) and (2).

### (1) Slide shaft 121

The slide shaft 121 is supported by the support piece 152 of the holder body 30 so that the rotating body 120 is rotatable and slidable, as illustrated in FIG. 6.

### (2) Connector holding part 122

The connector holding part 122 projects in an L shape in section in directions at right angles from the slide shaft 121, and projects inside the connector receiving cavity 33 of the holder body 30, as illustrated in FIG. 6.
The connector holding part 122 includes a catching piece 123 extending upward and a kick-out piece 124 extending laterally.

The catching piece 123 regularly projects inside the connector receiving cavity 33, faces opposite the fixing claw 153, and catches on the upper face of the connector 21 fitted into the connector receiving cavity 33. The catching piece 123 functions as a connector holding part in cooperation with the fixing claw 153.
When the slide shaft 121 is rotated upward, the kick-out piece 124 passes through the pass-through hole 154 on the bottom of the connector receiving cavity 33, projects inside the connector receiving cavity 33, and kicks the connector 21 fitted into the connector receiving cavity 33 out toward the open face.

That is, the kick-out piece 124 is capable of passing through the pass-through hole 154 only in the unlocked position when the rotating body 120 is slid toward the unlocking direction (toward the right on the depth side in FIG. 6). In the locked position when the rotating body 120 is slid in the locking direction (toward the left on the near side in FIG. 6), the kick-out piece 124 strikes the lower face of the bottom of the connector receiving cavity 33 and is incapable of passing through the pass-through hole 154.

### (Compression spring 130)

The compression spring 130 is compressed by the operating button 110 and the rotating body 120, and is used for returning the operating button 110 pressed by a finger.

### (Torsion coil spring 140)

The torsion coil spring 140 configures urging device, applying a rotational force so that the rotating body 120 is rotated toward one direction, that is, upward, and being capable of accumulating the rotational force when the rotating body 120 is rotated toward the opposite direction, that is, downward.

The parts of the urging device are not limited to the torsion coil spring 140.
Specifically, the torsion coil spring 140 is passed through by the slide shaft 121 of the rotating body 120, one end part is hooked on the holder body 30 and another end part is hooked on the rotating body 120, and rotational force is applied to the rotating body 120 by the return force of unwinding of the wound-tight torsion coil spring 140.
Also, the torsion coil spring 140 is positioned on the side opposite to the compression spring 130, and the rotating body 120 is urged by the compression return force thereof so as to slide toward the left on the near side in FIG. 6.

### (Method of use)

The method of use of the cable holder 100 according to the second embodiment having the above configuration is next described.

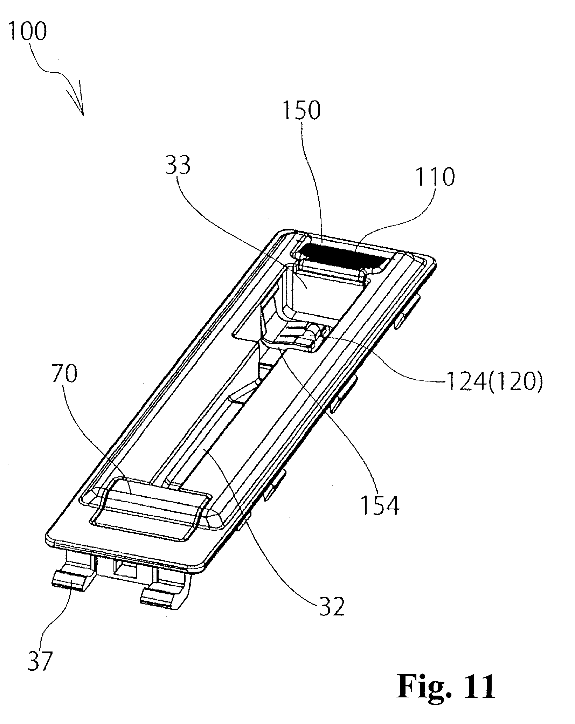

To remove the connector 21 from the state in which the connector 21 is received inside the connector receiving cavity 33, the operating button 110 should be pushed down toward the bottom of the button attachment part 150 of the holder body 30, as illustrated in FIG. 11.
When the operating button 110 is pushed down, the operating button 110 rotates centered on the projecting part 151 of the holder body 30. At this time, the rotating body 120 is slid by the effective part 112 of the operating button 110 toward the unlocking direction (toward the right on the depth side in FIG. 6).

At the same time, the compression spring 130 is compressed and accumulates compression return force by the pressing down of the operating button 110. Also, the torsion coil spring 140 is compressed and accumulates compression return force by the sliding of the rotating body 120 toward the unlocking direction (toward the right on the depth side in FIG. 6).
When the rotating body 120 slides toward the unlocking direction (toward the right on the depth side in FIG. 6), the positions of the kick-out piece 124 and the pass-through hole 142 on the bottom of the connector receiving cavity 33 of the holder body 30 coincide.

The rotating body 120 therefore rotates by the return force of unwinding of the torsion coil spring 140, and the kick-out piece 124 passes through the pass-through hole 154 and projects inside the connector receiving cavity 33.
Furthermore, by the rotation of the rotating body 120, the lower face of the connector 21 is pushed by the kick-out piece 124 and ascends, and floats up slightly from the open face of the connector receiving cavity 33.
The connector 21 having floated up can therefore be taken and removed from the connector receiving cavity 33.

When the force pushing the operating button 110 downward is released, the operating button 110 ascends and returns by the compression return force of the compression spring 130.
On the other hand, to receive the connector 21 having been removed, the connector 21 should be aligned with and fitted into the open face of the connector receiving cavity 33.
When the connector 21 is fitted in, the lower face thereof contacts the kick-out piece 124 having ascended from the connector receiving cavity 33.

Here, when the connector 21 is pushed down toward the bottom of the connector receiving cavity 33, the lower face thereof is pressed and the kick-out piece 124 descends.
When the kick-out piece 124 descends and passes through the pass-through hole 154, the rotating body slides by the compression return force of the torsion coil spring 140 in the locking direction (toward the left on the near side in FIG. 6).
When the rotating body 120 slides, the positions of the kick-out piece 124 and the pass-through hole 154 shift, and the kick-out piece 124 strikes the lower face on the bottom of the connector receiving cavity 33 and is incapable of passing through the pass-through hole 154.

Also, when the kick-out piece 124 rotates in the descending direction, the torsion coil spring 140 is rotated in the direction of winding tight and accumulates spring force.
Furthermore, by the rotation of the kick-out piece 124 in the descending direction, the catching piece 123 catches on the upper face of the connector 21, and holds the connector inside the connector receiving cavity 33 in cooperation with the fixing claw 153.

### (Third embodiment)

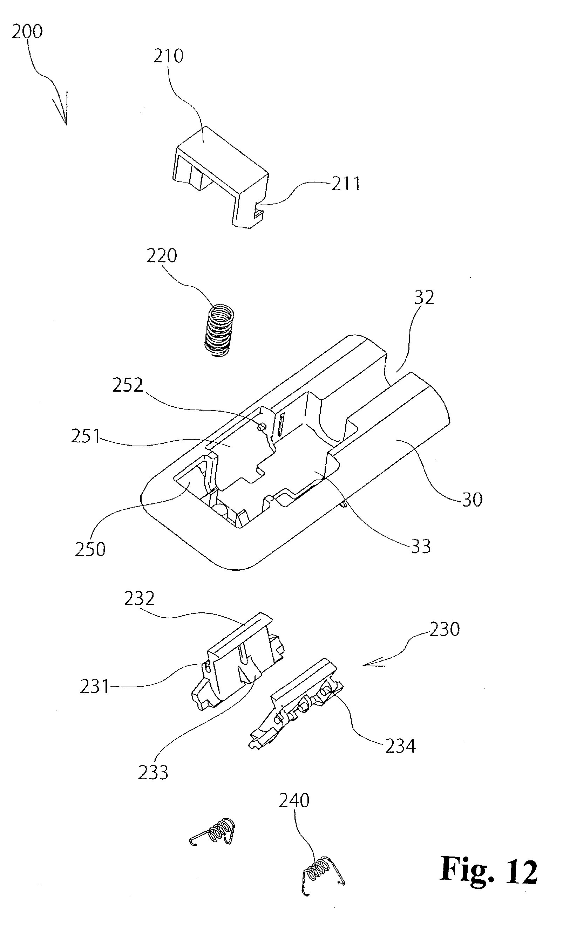

A third embodiment of the present invention is next described using FIGS. 12 and following.

The characteristic point of the present embodiment is that the functions of the connector holding part and the connector push-out device can be combined by a pair of arms 230 capable of holding the connector 21 from both sides.
The cable holder 200 according to the present embodiment, broadly divided, has the following parts.

The following (1) to (5), excluding (6) are to be described. Also, in the description of the present embodiment, the same symbols are used for the same constituent parts as in the first embodiment described using FIGS. 1 to 5, and the descriptions are omitted.
(1) Holder body 30
(2) Operating button 210
(3) Button return spring 220
(4) Arm 230 (connector holding part, connector push-out device)
(5) Arm rotating spring 240 (urging device)
The parts of the cable holder 100 are not limited to the above (1) to (5).

### (Holder body 30)

The holder body 30 has nearly the same structure as the holder body 30 of the first embodiment described using FIGS. 1 to 5, as illustrated in FIG. 12.

As for the points of difference, firstly, a button attachment part 250 is provided, as illustrated in FIG. 12, instead of the lever attachment part 35 of the first embodiment. Specifically, the button attachment part 250 is for an operating button 210 to be described to be inserted, and is provided in a recessed form adjacent to the connector receiving cavity 33.
Secondly, a pair of arm attachment parts 251 is provided in recessed form on both sides in the width direction in the connector receiving cavity 33, as illustrated in FIG. 12. A pair of arm rotating shafts 252 for supporting rotatably the arms 230 to be described project to face each other at mid-height on the arm attachment parts 251.

### (Operating button 210)

The operating button 210 is of a push type, and is used for decoupling from the pair of arms 23 to be described when the operating button 210 is pushed in, and unlocking the locked state of the arms 230.

Specifically, lock parts 211 bent in an L shape in section and extending toward the arms 230 attached to the arm attachment parts 251 are provided on both end parts in the width direction of the lower end part of the operating button 210, as illustrated in FIG. 12. The lock parts 211 project within the range of rotation of the arms 230 and block rotation of the arms 230, and decouple from the arms 230 and allow rotation of the arms 230 when the operating button 210 is pushed in and caused to descend. The lock parts 211 function as the lock device, but the lock device are not limited to the lock parts 211.

### (Button return spring 220)

The button return spring 220 is compressed by the bottom of the button attachment part 250 and the operating button 210, and urges the operating button 210 in the projecting direction.

### (Arm 230)

The arms 230 extend vertically toward the open face from the bottom of the connector receiving cavity 33, and are supported rotatably at mid-height by the arm rotating shafts 252, as illustrated in FIG. 12.

The arm 230 has the following parts, as illustrated in FIG. 12. The parts of the arm 230 are not limited to the following (1) to (5).

### (1) Shaft bearing part 231

The shaft bearing parts 231 are formed in a U shape with both end parts turned away from each other, and are positioned at mid-height of the arms 230, as illustrated in FIG. 12. The arm rotating shafts 252 of the arm attachment parts 251 are inserted into the shaft bearing parts 231.

### (2) Catching part 232

The catching parts project opposite each other positioned on the upper end part of each arm 230 positioned toward the side of the open face of the connector receiving cavity 33, and are used for catching on the upper face of the connector 21 fitted inside the connector receiving cavity 33 and functioning as the connector holding parts.

### (3) Mounting part 233

The mounting parts 233 vertically oppose each catching part 232, separated by a distance equal to the thickness of the connector 21, positioned on the lower end part of each arm 230 positioned toward the side of the bottom of the connector receiving cavity 33, holding the arm rotating shaft 242 in between with the catching part 232, and are used for mounting the lower face of the connector 21 and pushing the connector 21 out toward the open face when the catching parts 232 rotate in a direction of moving apart from each other.

### (4) Spring attachment part 234

The spring attachment parts 234 project in shaft form opposite to each other positioned on the back face sides of the arms 230, and are for arm rotating springs 240 to be described to be inserted through.

### (Arm rotating spring 240)

The arm rotating springs 240 are used for applying rotational force to the arms 230, and the arms 230 are urged by this rotational force in the direction that the catching parts 232 move apart from each other.

Specifically, the arm rotating spring 240 is configured with a coil spring, one end part thereof is hooked to the holder body 30 and another end part is hooked to the arm, and the rotational force is applied to the arm 230 by the return force of unwinding of the wound-tight arm rotating spring 240.

### (Method of use)

The method of use of the cable holder 200 according to the third embodiment having the above configuration is next described.

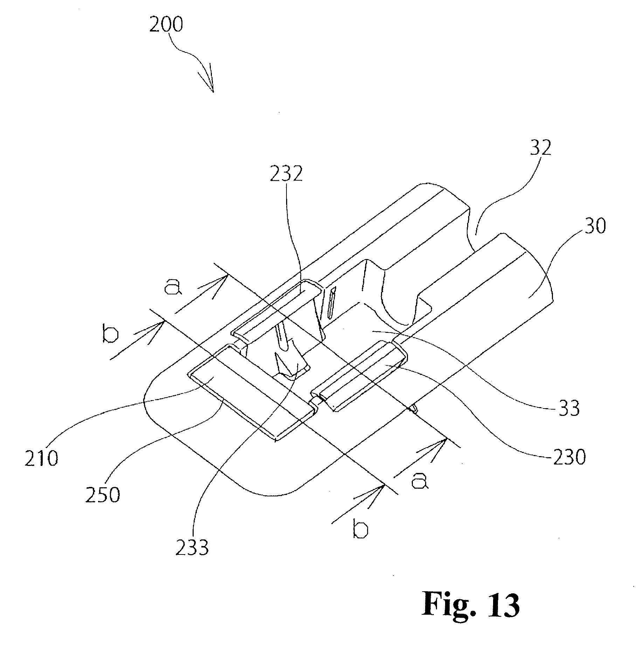

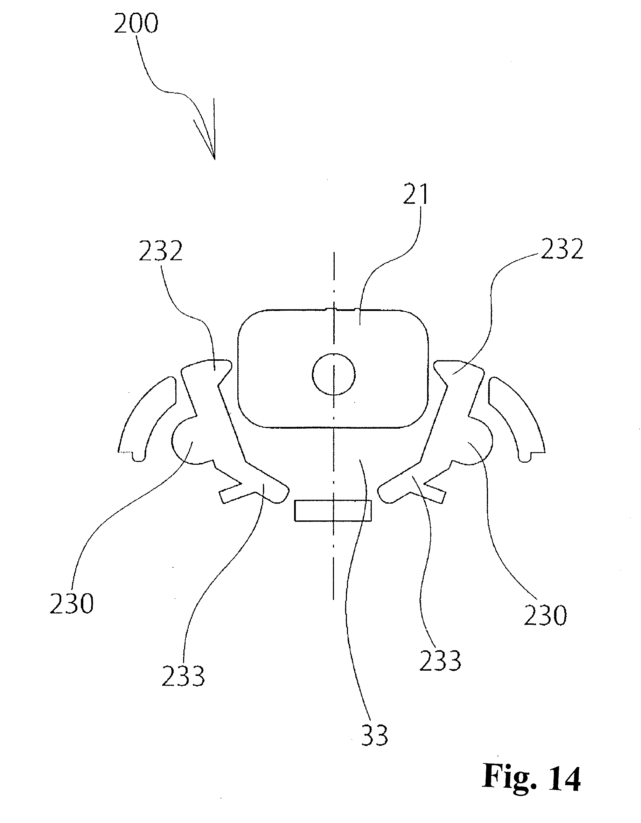

To remove the connector 21 from the state in which the connector 21 is received inside the connector receiving cavity 33, the operating button 210 should be pushed down toward the bottom of the button attachment part 250 of the holder body 30.
When the operating button 210 is pushed down, the lock parts 211 decouple from the arms 230 and the arms 230 become rotatable.
The arms 230 therefore rotate centered on the arm rotating shafts 252 of the holder body 30 by the spring return force of the arm rotating spring 240, and rotate in the direction that the catching parts 232 move apart from each other, as illustrated in FIGS. 13 and 14.

At this time, the lower face of the connector 21 inserted inside the connector receiving cavity 33 is pushed up by the mounting parts 233 of the arms 230. The connector 21 therefore floats up slightly from the open face of the connector receiving cavity 33, and the connector 21 having floated up can be taken and removed from the connector receiving cavity 33.
When the force pushing the operating button 210 downward is released, the operating button 210 ascends and returns by the compression return force of the button return spring 220.

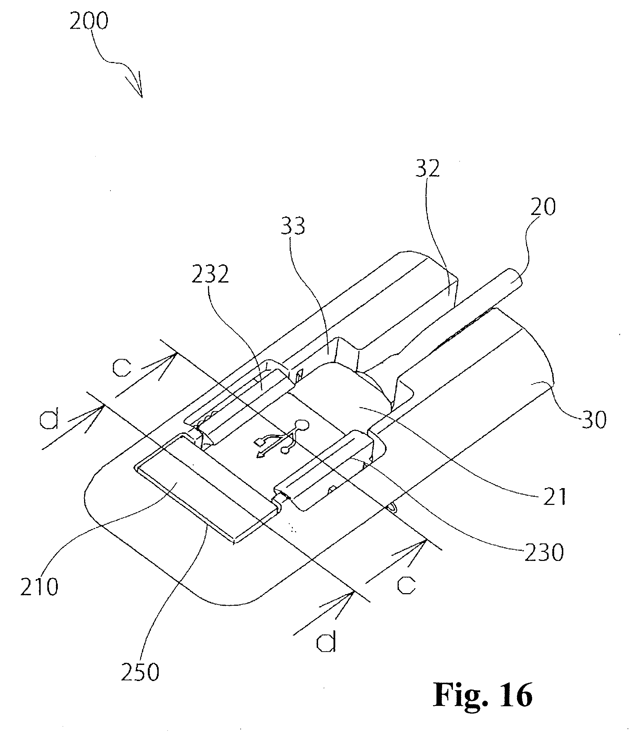

On the other hand, to receive the connector 21 having been removed, the connector 21 should be aligned with and fitted into the open face of the connector receiving cavity 33.
When the connector 21 is fitted in, the lower face thereof contacts the mounting parts 233 of the arms 230.
Here, when the connector 21 is pushed down toward the bottom of the connector receiving cavity 33, the lower face thereof is pressed and the mounting parts 233 descend, the arms 230 rotate centered on the arm rotating shaft 252, and the catching parts 232 rotate in the direction of approaching each other, as illustrated in FIG. 16.

The catching parts 232 therefore catch on the upper face of the connector 21, and the connector 21 is held inside the connector receiving cavity 33, as illustrated in FIG. 16.
At this time, the arm rotating springs 240 are rotated in the direction of winding tight and accumulate rotational force.
Also, the lock parts 211 of the operating button 210 project within the range of rotation of the arms 230, and rotation of the arms 230 by the abovementioned accumulated spring force of the arm rotating springs 240 is prevented.
The entire contents of the specification, claims, drawings, and abstract of Japanese Patent Application No. 2009-151046 filed on June 25, 2009 are incorporated by reference herein as a disclosure of the specification of the present invention.

## Claims

1. A cable holder for mounting on a vehicle, for holding a connector of a cable, the cable having one side connected to an in-vehicle electronic device and the connector to a portable electronic device at the other side, comprising:
a holder body adapted to be fixed inside a vehicle compartment, and having a recessed connector receiving cavity for fitting said connector;
at least one pair of connector holding parts projecting to face each other inside said connector receiving cavity for holding said connector fitted into said connector receiving cavity; and
a connector push-out device for pushing said connector fitted inside said connector receiving cavity out toward an open face of the connector receiving cavity in opposition to a holding force of said connector holding parts by an external operation.

2. A cable holder for mounting on a vehicle according to claim 1, wherein said connector push-out device comprises:
a rotating part supported rotatably on said holder body;
an operating part positioned on one end part to sandwich said rotating part and facing outward from said connector receiving cavity, said operating part being adapted to be pressable by an operator; and
a pressing part positioned on another end part to sandwich said rotating part and facing inside said connector receiving cavity, said pressing part rotating around the rotating part as a center of an axis by a pressing force when said operating part is pressed and pushing said connector fitted inside said connector receiving cavity out toward said open face.

3. A cable holder for mounting on a vehicle according to claim 1, wherein said connector push-out device comprises:
a rotating body supported rotatably on an inner wall of said connector receiving cavity, rotating in one direction and pushing said connector fitted inside said connector receiving cavity out toward said open face, said rotating body being rotatable in an opposite direction by being pressed by said connector when fitting said connector into said open face;
an urging device urging a rotational force to rotate said rotating body toward said one direction, and being capable of accumulating the rotational force when said rotating body rotates in the opposite direction; and
a lock device for locking the urging device in a state in which said urging device has accumulated the rotational force, the lock device being capable of unlocking the locked state by external operation.

4. A cable holder for mounting on a vehicle according to claim 3, wherein said connector push-out device comprises an operating button capable of unlocking the locked state of said lock device.

5. A cable holder for mounting on a vehicle according to claim 3 or 4, wherein
said rotating body comprises a pair of arms capable of holding said connector fitted inside said connector receiving cavity from two sides;
said arms extend vertically toward said open face from a bottom of said connector receiving cavity and are supported rotatably at mid-height by rotating shafts; and
said arms include, on upper end parts of said arms positioned toward a side of said open face of said connector receiving cavity, catching parts projecting to face each other and engaging an upper face of said connector fitted inside said connector receiving cavity to function as said connector holding parts; and
on lower end parts of said arms positioned toward a bottom side of said connector receiving cavity sandwiching said rotating shaft in between with respect to said catching part, mounting parts opposing vertically to said catching parts and separated by a distance equal to a thickness of said connector, said mounting parts mounting a lower face of the connector and pushing said connector out toward said open face when said catching parts rotate in a direction of moving apart from each other.

6. A cable holder for mounting on a vehicle according to any of claims 1 to 4, wherein:
said holder body is made with a synthetic resin having elasticity; and
said connector holding part includes an elastic piece formed by cutting out the inner wall of said connector receiving cavity.

7. A cable holder for mounting on a vehicle according to claim 6, wherein the holder body is equipped with a metal spring for urging said elastic piece in a projecting direction from said connector receiving cavity.
